# EUROPEAN PATENT APPLICATION

(11) **EP 1 345 141 A2**
(43) Date of publication of application: **17.09.2003**
(21) Application number: 02022676.7
(22) Date of filing: 10.10.2002
(51) Int. Cl.: G06F 17/60

(54) **A method and system for image distribution**

(30) Priority: 02.03.2002 GB 0204923
(71) Applicant: EASTMAN KODAK COMPANY, Rochester, New York 14650 (US)
(72) Inventor: Hardingham, Colin, Harrow, Middlesex, HA1 4TY (GB); McNulty, Patrick, Harrow, Middlesex, HA1 4TY (GB); Fry, Peter Thomas, Harrow, Middlesex, HA1 4TY (GB)
(74) Representative: Freeman, Avi

(57) **Abstract**

The invention provides a method and system of offering for sale images related to a television program via interactive television. The method comprises the step of in association with said program, displaying a representation of the image for sale and an invitation to purchase said image on a user's interactive television display.

## Description

### FIELD OF THE INVENTION

The present invention relates to a method and system for image distribution. In particular the invention relates to a method of offering for sale images related to events. The invention also relates to a computer program used to implement the method and control the system of the present invention.

### BACKGROUND OF THE INVENTION

In general, more people tend to watch events such as sporting events on television rather than actually attending the event. The televising of events enables a far wider audience to be reached. However, it is difficult for people to obtain images from events without actually attending the event. This relates particularly to spur of the moment images, the sort of which would be taken by a viewer when something of note happens in the course of the event. For example, if the event is a sporting event such as a football match and a viewer is at the game, when a goal is scored the viewer is likely to take a picture at that time to keep for posterity or as a reminder that he or she was there and saw it.

Some people are put off from attending large sporting events either because of the associated cost or due to fears about security at the event. It is desirable to enable such people to achieve a sense of involvement at an event even though they are not actually there.

A method and system is required that enables people to get spur of the moment photographs or have a sense of involvement at an event without actually attending.

Similarly, people like to feel involved with television programs such as soap operas or natural history programs. In soap operas, people may want reminders of significant moments in the story-line. In natural history programs, people may want pictures of a featured animal taken on location when the program itself was filmed. A method and system is required that enables these problems to be addressed.

### SUMMARY OF THE INVENTION

According to a first aspect of the present invention, there is provided a method of offering for sale images related to a television program via interactive television, comprising the step of, in association with said program, displaying a representation of the image for sale and an invitation to purchase said image on a user's interactive television display. Preferably, the interactive television is digital although the invention may also be implemented using analogue interactive television.

In one example of the present invention, the program comprises the broadcast of a live event. In this case, the image offered for sale is an image of an occurrence at the event. For example, if the event is a live football match, the images may be pitch-side images of the goal scorer immediately after a goal is scored.

In an alternative example of the present invention, the program is pre-recorded such as a soap-opera or a natural history program. In this case, the image is provided from a database of images related to the program. For example, if the program is a wildlife program with footage of one or more featured animals in the wild, the images may be photographs of the featured animals taken at the time the footage was captured.

If the program is of a live event the method further comprises, prior to the step of displaying a representation of the image for sale and an invitation to purchase said image, the step of transmitting a low-resolution version of the image captured at the event to an image purchase server, arranged to generate an interactive television data stream including said low-resolution version of the image.

The one or more images for sale may be displayed during transmission of the program or alternatively they may be displayed immediately after the transmission of the program. It is essential that the images are displayed in association with the program so that the link between the program and one or more images is clear to a viewer.

Preferably, the step of transmitting a low-resolution version of the image captured at the event for inclusion in the interactive television data stream further comprises transmitting said low-resolution version of the image from the image purchase server to an interactive television broadcast provider server.

Once a user has indicated a desire to buy a certain image, usually by pressing a predetermined button on the television remote control, a signal conveying this is sent, optionally by the user's set-top box, back to the Image Purchase Server. From there a signal is sent to a fulfilment provider, which provides the user with the desired image.

The fulfilment provider provides the image in hard form to the user in a predefined format. The predefined format may be any suitable format. Examples include but are not limited to the group consisting of photograph, mug, T-shirt, towel, mouse-mat or picture CD.

According to a second aspect of the present invention, there is provided a method of broadcasting an interactive television program, comprising the step of transmitting a television signal which, when received by a user's television system, causes the display of a representation of at least one image for sale related to the television program and an invitation to purchase said image on said user's interactive television system.

According to a third of the present invention, there is provided a system for the order of images via interactive television. The system comprises an image purchase server adapted to incorporate one or more low-resolution images into an interactive television data stream. The data stream is controlled such that when it is received by an interactive television system, a representation of the one or more images is displayed on the television system together with an invitation to purchase the one or more images.

Preferably, the image purchase server is in communication with an interactive television service provider arranged to receive the data stream and transmit a corresponding television signal.

Preferably, the image purchase server is in communication with a fulfilment service provider arranged to receive a purchase signal from the image purchase server. The purchase signal includes information relating to a particular image for purchase together with customer details e.g. address details, to enable a fulfilled version of said image to be sent to the customer.

According to a further aspect of the present invention, there is provided computer program code means, which when run on a computer, cause said computer to function as the image purchase server as required in the third aspect of the present invention.

In other words, when the computer program code means are run on a computer, the computer is controlled to incorporate one or more low-resolution images into an interactive television data stream. When the data stream is received by a user's television system, a representation of the one or more images is displayed on the television system together with an invitation to purchase the one or more images.

### ADVANTAGEOUS EFFECT OF THE INVENTION

The invention provides a method of offering for sale high quality images related to a program via interactive television. Furthermore, the invention enables an interactive television company to generate revenue from the sale of images and merchandise related to the television program.

Where the program is includes the broadcast of a live event, the invention provides a method capable of offering for sale high quality images in real-time i.e. immediately after the image was captured. The invention therefore provides a method that enables people to obtain spur of the moment photographs from events without actually attending the event.

People like to feel involved with television programs such as soap operas or natural history programs. The present invention provides a method and a system that enables a sense of involvement to be created with the subject matter of a program, which is desirable.

### BRIEF DESCRIPTION OF THE DRAWINGS

Examples of the present invention will now be described with reference to the accompanying drawings, in which:
Figure 1 shows a schematic block diagram to demonstrate the steps in the method of the present invention;
Figure 2 shows a more detailed schematic block diagram to demonstrate the steps in the method of the present invention; and,
Figures 3A and 3B show examples of possible screen displays for use in the method of the present invention.

### DETAILED DESCRIPTION OF THE INVENTION

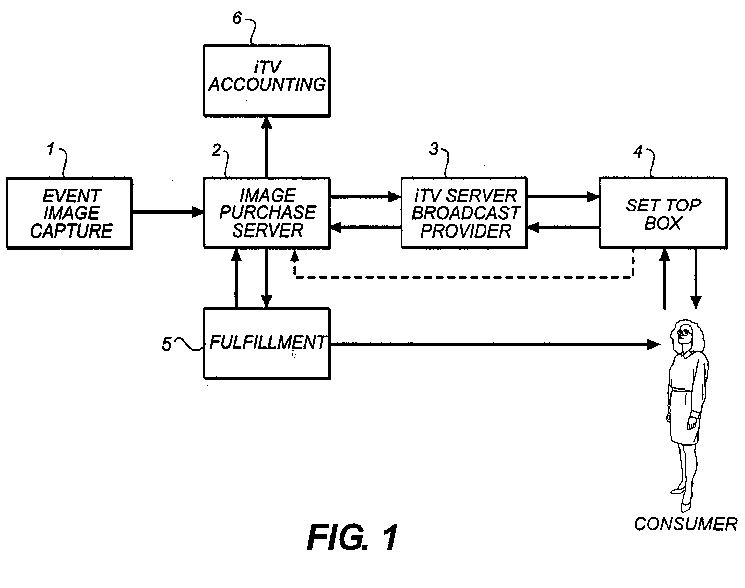

Figure 1 shows a schematic block diagram to demonstrate the steps in the method of the present invention of offering for sale images related to a program via interactive television. In the present example, the description is in relation to a television system including a television acting as an interactive television display, in combination with a receiver such as a set top box. It will be appreciated that the invention is not limited to such systems but rather includes any television system, which relies on the electronic transmission, reception and reproduction of transient visual images. A 'television program' therefore includes amongst others, a digital television program, an analogue television program, an internet television broadcast or any other suitable broadcast.

The steps shown in Figure 1 relate to a program of a live event such as a football match or any other suitable event. The invention is not limited to programs of live events, but applies equally to pre-recorded television programs.

Initially, at step 1, an image is captured. For example, if the event is a live football match, a photographer may be present with a camera to take pictures throughout the duration of the match. As will be explained below, at the image capture stage index information may be associated with each particular image to enable identification of the image downstream. At step 2, the image together with any associated index information is transmitted, usually wirelessly, to an image purchase server (IPS) 2. The IPS 2 stores the images transmitted by the photographer and provides an interactive television (iTV) service provider 3 with an application data stream.

The iTV service provider 3 then transmits an iTV signal or broadcast, for receipt by the television systems of respective users or subscribers. The signal or broadcast is used to provide a display on the television system of respective users or subscribers. As explained above, the television system may include any sort of display device that is capable of displaying iTV functions. For example the display may be on a television system which is made up of a set-top box having a receiver for receipt and processing of the television signal, coupled to a television acting as the iTV display, for display of the program and/or images. Alternatively, if the broadcast of the iTV signal is via the Internet the television system may comprise a PC connected to the internet having an associated PC monitor acting as the iTV display. It will be appreciated that any suitable type of television system and associated display may be used so long as the system has the capability of displaying and providing iTV functions.

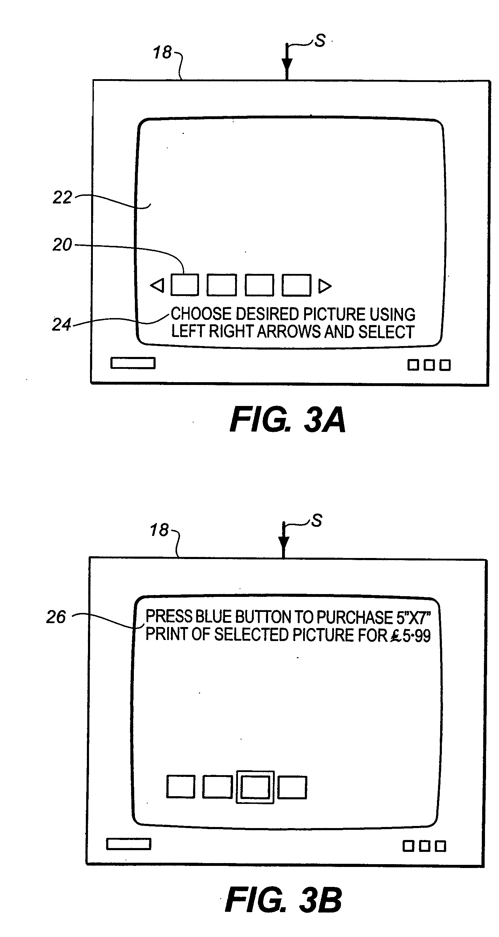

As will be explained below with reference to Figures 3A and 3B, the picture seen by a viewer on the display incorporates the image as transmitted by the photographer at the event. The image is typically displayed in a window within the television picture together with an offer to purchase the image.

If a user wishes to purchase an image offered for sale as described above, he uses his remote control to execute a purchase command on the screen. The request to purchase the image is then transmitted back to the IPS 2, either directly or optionally via the iTV service provider 3. Once a purchase request has been received by the IPS 2, the IPS sends an order to a fulfilment service provider 5. The order from the IPS 2 comprises the desired/customer-selected image (or identification thereof) together with any other required information such as a customer address and details of a requested format of the image. Different formats of fulfilment may be required. For example, the user may want a hard copy of a photograph or a T-shirt with the image printed on. The fulfilment service provider 5 may provide any suitable format. The fulfilment service provider 5 acknowledges receipt of the order and the order is then prepared and sent to the customer.

The order dispatch is forwarded to an accounting system 6 to trigger payment for the order by the customer. The payment may be made via the IPS 2 i.e. through the customer iTV account or alternatively a bill may be sent to the customer from the fulfilment service provider. Any suitable form of retrieving payment for the image from the customer may be used.

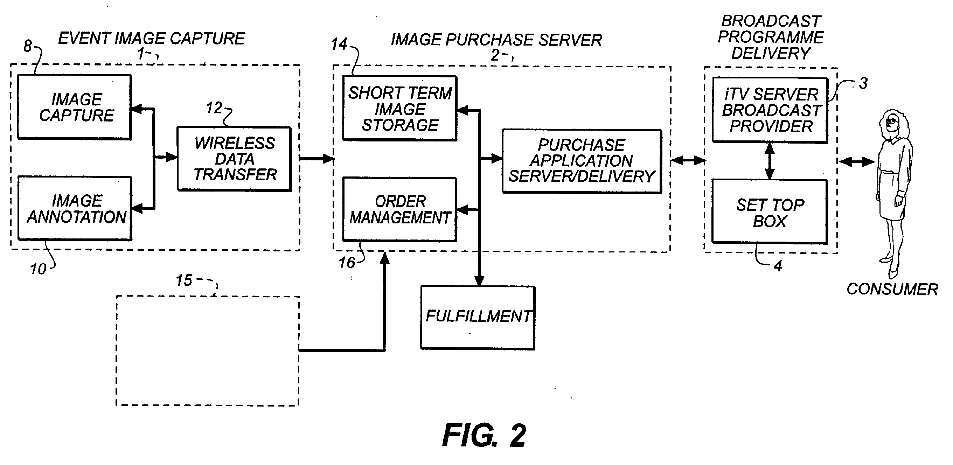

Figure 2 shows a more detailed schematic block diagram to demonstrate the steps in the method of the present invention. The event image capture 1 of figure 1 is broken down into the components of image capture 8, image annotation 10 and wireless data transfer 12. Typically, at a live event, image capture 8 is executed by a photographer with a suitable image capture device e.g. a digital camera. The image annotation 10 involves the assignment of index information with the image such that it is easily identifiable and retrievable should a customer order it. The annotated image is then transferred wirelessly to the IPS 2. The IPS 2 serves as a buffer between the iTV service provider (broadcaster) and the photographer, providing memory to store images captured and software to enable processing of the images for inclusion in iTV data stream.

The image is captured as a high-resolution image by the photographer at the event. However, it is processed and converted into a low-resolution image for wireless transfer to the IPS. This enables high-speed transfer of the image to the IPS 2. The wireless transfer of the low-resolution image may comprise any suitable form of electronic file transfer. For example, a hand-held computer with appropriate software may be utilised. Alternatively a Personal Digital Assistant PDA integrated with a mobile telephone may be used.

The low-resolution image is sufficiently high resolution such that a representation of the image may be produced on a customer's television, usually via the set top box 4, to enable the customer to decide whether or not they wish to purchase the image. However, this is still significantly lower than the resolution required for the final output, which will be provided to the customer, if they decide to purchase the image.

Typically, the low-resolution image may be provided as a thumbnail image having a size in the range of 75 x 50 and 300 x 200 pixels. Any suitable image format may be used for transmission of the low-resolution image. It is preferred that a highly compressed image format is used such as JPEG so that the required bandwidth for transmission is minimised thereby increasing the speed of transmission. In addition, if the low-resolution image is compressed, it is easier to incorporate it into the iTV data stream. Transmission of a low-resolution image in this manner enables immediate real-time transfer of the image. It is inefficient to display high-resolution images on the television in the offers to purchase. It is only necessary to display an image of sufficiently high resolution to enable the decision to be made by the customer as to whether or not the image is desired.

If the program to which the images relate is a pre-recorded program the supply of low resolution images to the IPS 2 is provided from an alternative image archive 15 in communication with the IPS 2. Examples include internet based image archives such as Ophoto ®, Mirrorpix or any other suitable image archive.

A high-resolution version of each image transferred to the IPS 2 is sent to the fulfilment service provider 5 shown in Figure 1. This may be sent by post, courier or any other suitable delivery method. The high-resolution version of the image may comprise a hard copy such as a photograph or a high-resolution electronic image file. The transfer of the high-resolution image need not be instantaneous. It is however essential that it arrives at the fulfilment service provider 5 in time for the final output to be prepared and sent out to customers within a reasonable period of time e.g. 3 to 4 days or within the terms of any agreement with the customer.

The IPS 2 has data processing capability to perform its necessary functions. Short-term image storage capacity 14 is provided for receiving and storing all the low-resolution images from the event image capture stage. Typically the short-term image storage capacity 14 is a memory such as a RAM or hard drive, associated with the IPS 2. The IPS 2 also comprises an order management module 16. The order management module 16 serves to track any transactions and keep records in relation to any orders received from customers. It may include, for example, accounting information to enable charges for customers to be calculated. Typically, the order management module is implemented via software running on a suitable computer.

As explained above, the IPS 2 provides an interactive television service provider 3 with an application data stream. The iTV service provider 3 in turn transmits a television signal for receipt by the television systems of respective users. In the case where a set top box is used, each set top box 4 is adapted to receive the signal from the interactive television (iTV) service provider 3 and provide a signal to the user's television for display. Figures 3A and 3B show examples of possible screen displays for use in the method of the present invention.

A television 18 receives a signal S from the set top box (not shown) with information to enable images 20 to be displayed within a picture 22 on the screen. An invitation 24 is displayed inviting a viewer to select a desired one of the four images shown by using the left and right arrow keys on the television remote control handset (not shown). Figure 3B shows the next step in the process in which one of the four displayed images 20 has been selected. The invitation to the viewer now asks the viewer to confirm that it is desired to purchase the selected image. Once this is confirmed by the viewer, by pressing the appropriate key on the remote control handset, a signal is sent via the set top box to the IPS to process the transaction and start the process by which the final product will be sent to the viewer. Any other suitable navigation may be offered to a user to enable the purchase of one or more of the displayed images. For example, a link to a gallery of recently captured images may be displayed on the screen.

In one example of the present invention, the television program is a pre-recorded program such that the steps of image capture and transmission to the IPS are not required. For example, if the television program is a wildlife program, the images could be obtained from a database of high quality pictures of animals featured in the program. If the program is a soap opera, the images could be obtained from a database of high quality pictures of dramatic scene shots or character portraits. If the program is a children's television program the images could be obtained from a database of high quality pictures of character portraits. If the program is a news or current affairs program, the images may be character shots of people in the news or location shots from the source of the news. The program maker may provide the database of images-for-sale to the IPS 2 for inclusion in the data stream for sending to the iTV service provider 3.

In the case of a pre-recorded program the navigation by which a user is offered the opportunity to purchase an image may comprise a link to one or more galleries of thumbnail images relating to the program. If the program is a natural history program about e.g. polar bears, the navigation may comprise a link accessible via iTV to a gallery of images of polar bears in their natural habitat, which were optionally captured during the making of the actual program.

It will be appreciated that further possible types of program exist which have corresponding selections of appropriate images related thereto.

The invention provides a method of offering for sale high quality images related to a program via interactive television. Where the program is of a live event, the present invention enables the offer for sale of images in real-time. The present invention provides a method and a system that enables a sense of involvement to be created with the subject matter of a program.

## Claims

1. A method of offering for sale images related to a television program via interactive television, comprising the step of:
in association with said program, displaying a representation of the image for sale and an invitation to purchase said image on a user's interactive television display.

2. A method according to claim 1, in which the interactive television is digital.

3. A method according to claim 1, in which the program comprises the broadcast of a live event and in which the image offered for sale is an image of an occurrence at the live event.

4. A method according to claim 1, in which the television program is pre-recorded and the image is provided from a database of images related to the television program.

5. A method according to claim 3, in which the method further comprises, prior to the step of displaying a representation of the image for sale and an invitation to purchase said image, the step of transmitting a low-resolution version of the image captured at the event to an image purchase server, arranged to generate an interactive television data stream including said low-resolution version of the image.

6. A method according to claim 1, in which the image for sale is displayed during transmission of the television program.

7. A method according to claim 6, in which the step of transmitting a low-resolution version of the image captured at the event for inclusion in the interactive television data stream further comprises transmitting said low-resolution version of the image from the image purchase server to an interactive television broadcast provider server.

8. A method according to claim 7, further comprising the step of transmitting said interactive television data stream from the interactive television broadcast provider server for display by respective users' interactive television displays.

9. A method according to claim 8, in which when a user purchases an image, a purchase request is transmitted to the image purchase server, optionally via a user's set top box.

10. A method according to claim 9, in which a high-resolution fulfilled image is provided to the user via a fulfilment provider.

11. A method according to claim 10, in which the fulfilment provider provides the image in hard form to the user in a predefined format selected from the group consisting of photograph, mug, T-shirt, towel, mouse-mat, picture CD or any other suitable format.

12. A method of broadcasting an interactive television program, comprising the step of transmitting a television signal which, when received by a user's-television system causes the display of a representation of at least one image for sale related to the television program and an invitation to purchase said image on said user's interactive television system.

13. A system for the order of images via interactive television, comprising an image purchase server adapted to incorporate one or more low-resolution images into an interactive television data stream such that when said data stream is received by a user's television system, a representation of the one or more images is displayed on the television system together with an invitation to purchase said one or more images.

14. A system according to claim 13, in which the image purchase server is in communication with an interactive television service provider arranged to receive the data stream and transmit a corresponding television signal.

15. A system according to claim 13, in which the image purchase server is in communication with a fulfilment service provider arranged to receive a purchase signal from the image purchase server, the purchase signal including information relating to a particular image for purchase together with customer details to enable a fulfilled version of said image to be sent to the customer.

16. Computer program code means, which when run on a computer, cause said computer to incorporate one or more low-resolution images into an interactive television data stream such that when said data stream is received by a user's television system, a representation of the one or more images is displayed on the television system together with an invitation to purchase said one or more images.
